# EUROPEAN PATENT APPLICATION

(11) **EP 4 446 468 A1**
(43) Date of publication of application: **16.10.2024**
(21) Application number: 23167533.1
(22) Date of filing: 12.04.2023
(51) Int. Cl.: C25B 1/04, C25B 9/05, C25B 9/60, C25B 9/65, C25B 9/67, C25B 15/08, F03D 9/19

(54) **ELECTROLYZER CARTRIDGE**

(71) Applicant: Siemens Gamesa Renewable Energy A/S, 7330 Brande (DK)
(72) Inventor: Soylu, Mahmut Erbil, 4700 Naestved (DK)
(74) Representative: SGRE-Association

(57) **Abstract**

The present invention relates to a compact electrolyzer cartridge (20) to be connected in connection to a wind turbine (1) to provide power to an electrolyzer (100), where the electrolyzer is positioned within a cartridge (20) inner volume (40) defined by a cartridge outer casing (30), and wherein the cartridge (20) is of a size allowing only one electrolyzer (100) within the casing (30).

The present invention further relates to the method to produce such a compact electrolyzer cartridge (20).

## Description

### FIELD OF INVENTION

The present invention relates to electrolyzers, or more specifically electrolyzers adapted to be connected to wind turbines, such as grid connected wind turbines partly supplying power to the grid and partly to the electrolyzers, or offgrid wind turbines only connected for powering the electrolyzers.

### BACKGROUND

In current systems a plural of such electrolyzers in standard sized containers to be positioned at e.g. remote locations, such as in connection to off-shore wind turbines.

The wind turbines could be positioned onshore, but the present invention especially solves problems for offshore positioned wind turbines.

In case the electrolyzers are pressurized, a leak is a risk, which could lead to an explosion.

In case the electrolyzers for example are powered by a nongrid connected wind turbine and/or photo-voltage plants, a problem occurs in the periods of no wind and cold and dark weather periods. It is expensive to isolate and heat large containers during, and if there are no grid connection, a substantial backup power generation and/or storage system is required.

A further problem with the container solution relates to changing containers, such as when positioned in at the sea. is quite expensive, and frequent replacement will be required. A further problem related to the container solution is during start and stop, where it takes a significant time for a the multi-electrolyzer container to start up, bring the hydrogen quality to some level and start production. During stop operation, since the un-controlled volume within the container is quite large, it requires a significant amount of purge volume, larger nitrogen system etc.

### SUMMARY OF THE INVENTION

The scope of the present invention is to overcome these problems.

This scope is met by the subject matter according to the independent claim. Advantageous embodiments of the present invention are described by the dependent claims.

According to the invention, this includes introducing a compact electrolyzer cartridge to be connected in connection to a wind turbine to provide power to an electrolyzer, where the electrolyzer is positioned within a cartridge inner volume defined by a cartridge outer casing, and wherein the cartridge is of a size allowing only one electrolyzer within the casing.

Alternatively, the invention includes introducing a compact electrolyzer cartridge to be connected in connection to a wind turbine to provide power to an electrolyzer, where the electrolyzer is positioned within a cartridge inner volume defined by a cartridge outer casing, and wherein the distance between the cartridge inner surface and the electrolyzer along any line is less than the respective dimension of the electrolyzer along the same line.

Alternatively, the invention includes introducing a compact electrolyzer cartridge to be connected in connection to a wind turbine to provide power to an electrolyzer, where the electrolyzer is positioned within a cartridge inner volume defined by a cartridge outer casing, and wherein at one of the height, width, and/or length of the outer casing is less than 2 times the respective height, width and/or length of the electrolyzer.

In either of these three the basic is the cartridge being made compact and waste as little space as possible. It is thus also an aim to optimize the size of the inner volume, or in other words, to reduce 'waste' volume. A smaller volume means less needed storage capacity and easier handling, e.g. smaller transport vessels (ships, trains, trucks etc., depending on the location) needed, less powerful cranes required to handle the cartridges etc.

The electrolyzer may pressurized.

The inner volume may be filled with a substance outside the electrolyzer. The substance may be a gel or fluid and may e.g., be or include Bingham plastic fluid or a substance of similar properties.

The substance may comprise thermal insulation properties.

A heater may be positioned in contact with the inner volume.

The casing may comprise openings for inlet and outlet substances for the electrolyzer, such as gasses, liquids or mixes thereof, and wherein conduits in the inner volume connects the electrolyzer with the openings and is within the substance.

The casing may comprise openings for electrical connection to the electrolyzer, and wherein conductors in the inner volume connects the electrolyzer with the openings and is within the substance.

The casing, or cartridge, may further comprises transporting means adapted for transport of the cartridge.

The invention further includes introducing a method including to provide an electrolyzer and position it within a cartridge inner volume defined by a cartridge outer casing, wherein the cartridge has at least one dimension that allows only one electrolyzer within the casing, and wherein the cartridge is adapted to be connected in relation to a wind turbine to power the electrolyzer.

The method may include to fill the inner volume with a substance outside the electrolyzer. The substance may be a gel or fluid and may e.g., be or include Bingham plastic fluid or a substance of similar properties.

The method may include to pressurize the electrolyzer.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a schematic presentation of a wind turbine including a platform and containers positioned on the platform
- Figure 2: shows a front cross section view of a cartridge according to the present invention
- Figure 3: shows a platform at a wind turbine with a plural of cartridges and paths to transport the cartridges at the platform.
- Figure 4: shows an embodiment where the paths are formed as overhead cranes or hoists adapted to carry the cartridges over the platform.
- Figure 5: shows a flow chart presenting the method to produce the cartridge by positioning an electrolyzer in a cartridge outer casing.
- Figure 6: shows a flow chart presenting the method to produce the cartridge by positioning an electrolyzer in a cartridge outer casing and fill then cartridge inner volume with a substance, and/or to pressurize the electrolyzer.

### Detailed Description

The illustrations in the drawings are schematic. It is noted that in different figures, similar or identical elements are provided with the same reference signs.

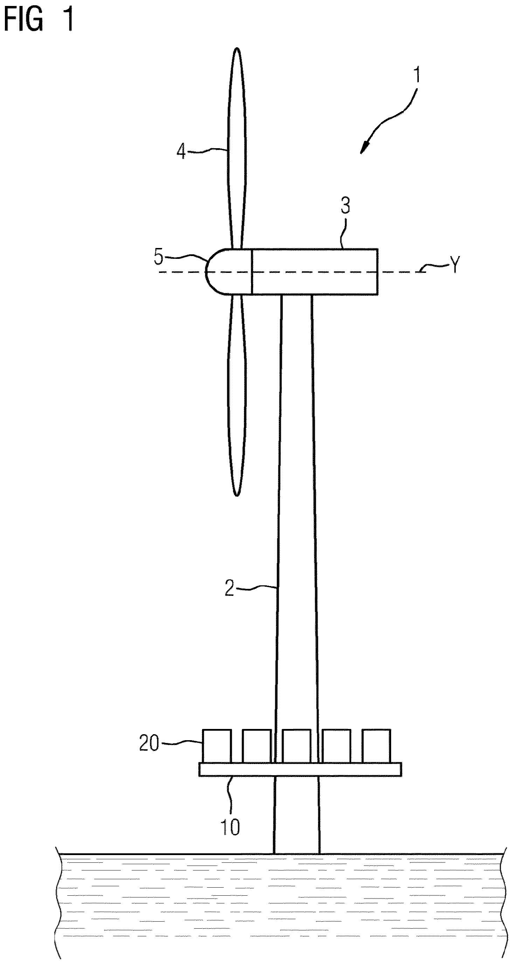

**Figure 1** shows an embodiment wind turbine 1 positioned in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a longitudinal rotation axis Y. The wind turbine 1 comprises an electric generator.

In the illustrated embodiment a platform 10 is positioned at the tower 2. The position of the platform 10 at the tower 2 could be such that it is generally above water despite waves and tides.

The platform 10 is adapted for cartridges 20 to be positioned and optionally fixed on its surface. In a non-exclusive manner the cartridges 20 could comprise operational parts such as hydrogen production plant, but could be other systems e.g., CO2 extraction machines. In the following the cartridges 20 are exampled as comprising hydrogen producing plants.

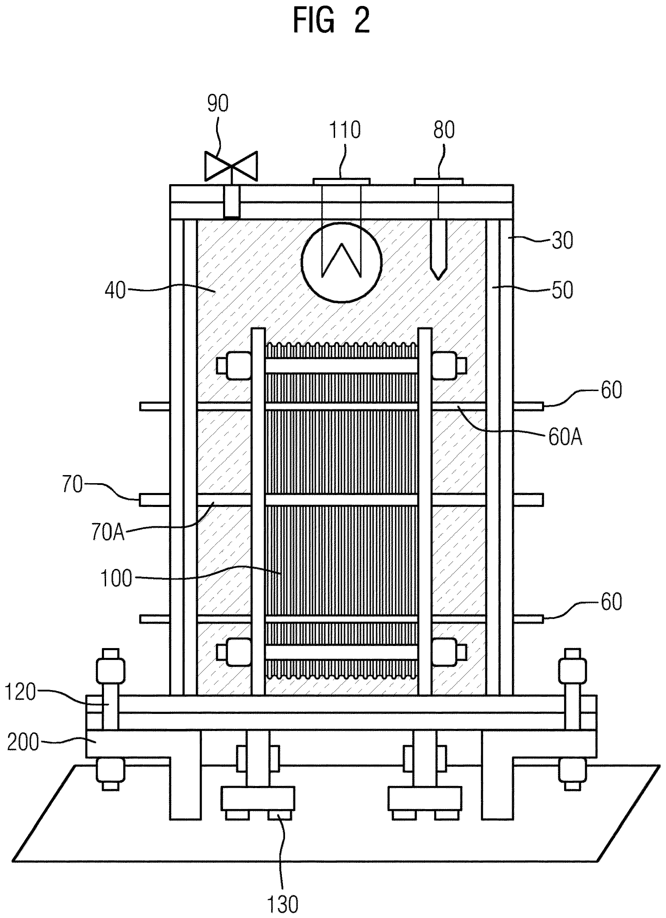

**Figure 2** illustrates a front view of an embodiment cartridge 20 revealing inside parts.

The cartridge 20 comprises a cartridge casing 30 which at the inner surface facing the cartridge 20 inner volume 40 may be formed with an insulation 50.

The casing 30 (and optional insulation 50) may comprise openings 60 for inlet and outlet substances for the electrolyzer 100, such as gasses, liquids or mixes thereof. Conduits 60A in the inner volume 40 connects the electrolyzer 100 with the openings 60 for the transportation of the inlet and outlet substances.

The casing 30 (and optional insulation 50) may comprise openings 70 for electrical connection to the electrolyzer 100, and wherein conductors 70A in the inner volume 40 connects the electrolyzer 100 with the openings 70 for providing current to the electrolyzer 100.

The example shows an electrolyzer 100 positioned within the inner volume 40 and could be formed as by a stack of electrolyzer parts including e.g., stacks of anodes and cathodes, where the anodes and cathodes are separated by membranes.

In one embodiment the inner volume 40 within the cartridge 20 and outside the electrolyzer 100 is filled with a substance, such as a gel or fluid like Bingham plastic fluid, which is a viscoplastic material that behaves as a rigid body at low stresses but flows as a viscous fluid at high stress. At times of stand-still, the gel forces in the fluid will be high, so in the event of a sudden failure of the electrolyzer (e.g. an explosion), the fluid covering the electrolyzer will act like a solid during the initial impact, thus lowering the impact on the pressure chamber.

In an embodiment the conduits 60A and/or conductors 70A are positioned within the substance inside the inner volume 40.

The electrolyzer solution may be stored within the inner volume 40. This will in case of an electrolyzer failure assist in preventing an explosion e.g. in that the inner volume 40 will be essentially free of oxygen, and by the nature of the substance.

A pressure sensor 80 may be positioned within the compact cartridge 20 monitoring the pressure within.

Further, to adjust the pressure within the cartridge 20, and more especially in case of a registered overpressure, an attached relief valve 90 may be connected to reduce the pressure.

The cartridge 20 is small and compact compared to traditional containers each comprising a plural of electrolyzers 100. Each cartridge 20 may only comprise one electrolyzer 100 (where each electrolyzer 100 could be composed as an electrolyzer stack). In case of e.g., a damaged or failing electrolyzer 100, only the relatively easy handable respective cartridges 20 need to be exchanged, just as only the one malfunctioning cartridge 20 needs to be exchanged, the rest can remain in operation.

This for example enables smaller cranes for replacing the cartridges 20 compared to the traditional containers, and for cartridges 20 positioned in relation to e.g., offshore wind turbines, smaller ships for the replacement would also be made possible.

The cartridge 20 solution further enables easy upgrading to newer, or just different, electrolyzer 100 designs. Rather than needing to redesign the inner piping and arrangements of the electrolyzers 100 within a container, the cartridge casing 30 simply being adapted to fit the respective electrolyzer 100. In one embodiment the connections are positioned at standardized positions, such as the openings 60, 70 for respectively the gas, liquid or mix thereof inlet and outlet, and the electrical connection. This enables easy replacement without the need of on-site adaptations.

To regulate the temperature within the cartridge 20, it may be formed with a heater 110, such as an electric heater. During windy periods the electric heater 110 can be powered by the wind turbine.

In one embodiment the electric heater 110 provides heat to the electrolyzer 100 via the substance in the inner volume 40.

However, in the periods of no wind, with no grid connection and/or in the cold weather periods, thermal management is a problem. It is expensive to isolate and/or heat large containers during periods of no wind durations, and thus a substantially large backup power generation / storage system is required.

Due the smaller mass and volume of the cartridges 20 compared to multi-electrolyzer 100 containers, and the exclusion of the container itself, the required power for thermal management is decreased. Further thermal improvement is enabled by the inner insulation 50 reducing the thermal flux through the cartridge 20 and minimize the heat loss. In one embodiment, the media filled into the inner volume 40, such as Bingham plastic fluid, may be selected or optimized for increased thermal insulation, such as by additives etc. These features alone and in combination has the advantage of reducing need of power supply during these periods, with the advantage smaller backup power generation / storage system may be implemented.

When starting traditional multi-electrolyzer 100 container systems, it takes a significant time bringing the hydrogen up to the spec, pressurizing the system, purging with nitrogen on the hydrogen side and ventilating with air on the oxygen side. This is due to the combined piping inside the container forming a relatively large volume, requiring a large purge volume and larger nitrogen system. In the present cartridge 20 design, balance of stack volumes can be minimized and the preparation time of the electrolyzer 100 within for operation will be reduced.

The cartridge 20 may further be equipped connection means 120 of any kind allowing it to be fixated e.g., to the platform 10 surface, such as to platform connection means 200. In the illustrated embodiment the connection means 120 are formed as flanges protruding from the bottom surface formed with openings formed openings in platform connection means 200 reaching from the platform 10. The cartridge 20 then will be positioned with the openings matching and fixed to the platform 10 e.g., by a bolt or screw positioned in the openings. Alternative fixation means would also apply as it would be apparent to the skilled person, like clamp-connection etc.

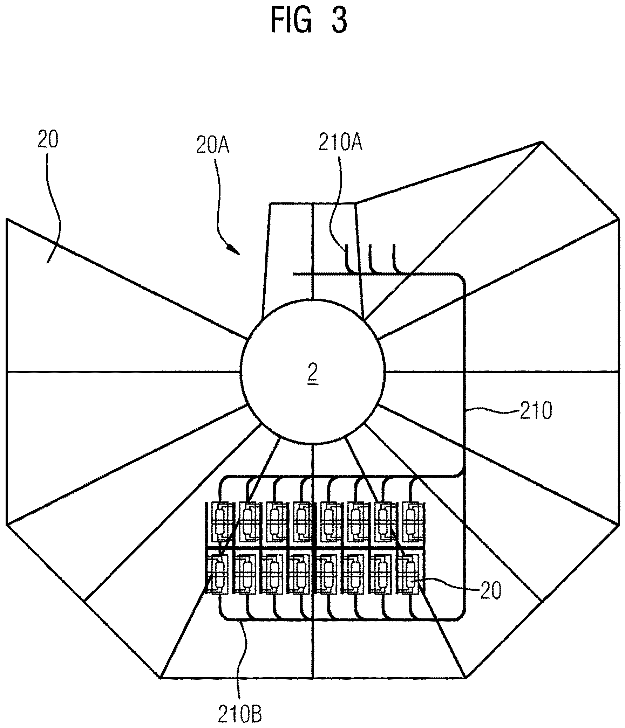

The cartridge 20 may further be formed with transporting means 130 such as rollers of any kind, caterpillars etc. In an embodiment as illustrated in figure 3, the platform 10 then are formed with a network of paths 210 adapted to allow a guided and safe transport of the cartridges 20 in the platform 10 surface.

In the present embodiment example, the transporting means 130 are wheels adapted to roll on the paths 220 formed as rail positioned on the platform 10 surface. Other embodiments would however also apply, e.g. the paths 210 being deepening's in the platform 10 surface or defined by other border means adapted to guide the cartridges 20, the transporting means 130 possible being wheels.

As illustrated in **figure 3****,** the paths 210 forms a network of connected sub-paths 210A, 210B, or branches.

These sub-paths could form a section 210A where the cartridges 20 will be accessible for exchange. This exchange section 210A could e.g. be positioned at a part of the platform 10 where it is shaped 10A in a manner allowing ships to come in position and access the cartridge 20 positioned in the exchange section 210A, e.g. by a crane. Alternatively, a crane or other means to tower or move the cartridges 20 between the ship a platform could be positioned on the platform 10.

The sub-paths further form storing sections 210B forming branches where the individual cartridges 20 may be stored during operation and fixated as previously described.

The individual sub-paths 210A, 210B will be connected by paths 210.

This enables easy, stable, and safe handling of the cartridges 20, both under exchange and under operation. The compactness of the cartridges 20 ensuring easy handling, and the possibility to store them on the platform 10 in a compact manner.

As for the connections by the openings 60, 70, the connection means 120 and transportation means 130 may be standardized in the manner they could be fit to any cartridge 20 for any suitable electrolyzer 100.

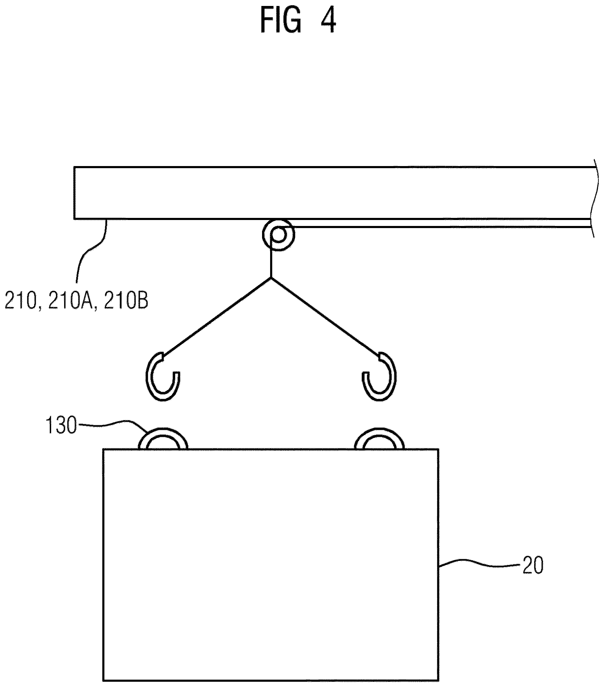

**Fig. 4** illustrates another embodiment where the paths 210 and individual sub-paths 210A, 210B are formed as an overhead crane or hoist system and the transporting means 130 are any means as known in the art adapted for the crane to connect to the cartridge 20 to lift it above the platform 10 surface.

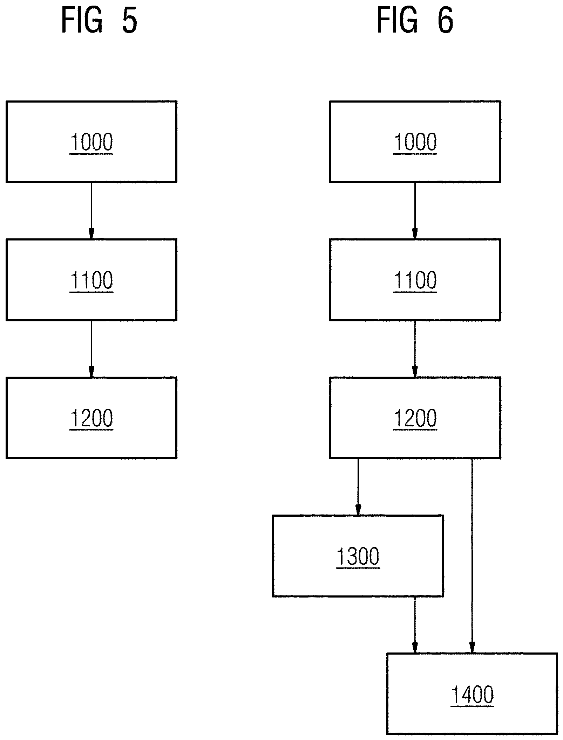

**Fig. 5** illustrates the method to produce a compact electrolyzer cartridge (20), the method including (1000) to provide an electrolyzer (100), to provide (1100) a cartridge (20) having at least one dimension that allows only one electrolyzer (100) within the casing (30), and (1200) position the electrolyzer (100) within a casing (30) inner volume (40), and wherein the cartridge (20) is adapted to be connected in relation to a wind turbine (1) to power the electrolyzer (100) .

Fig. 6 illustrates the method further including the step 1300 to fill the inner volume (40) with a substance outside the electrolyzer. The substance may be a gel or fluid and may e.g., be or include Bingham plastic fluid or a substance of similar properties.

Alternatively, or subsequent the step 1300, the method includes 1400 to pressurize the electrolyzer(100).

## Claims

1. A compact electrolyzer cartridge (20) to be connected in connection to a wind turbine (1) to provide power to an electrolyzer (100), where the electrolyzer is positioned within a cartridge (20) inner volume (40) defined by a cartridge outer casing (30), and wherein the cartridge (20) is of a size allowing only one electrolyzer (100) within the casing (30).

2. A compact electrolyzer cartridge (20) to be connected in connection to a wind turbine (1) to provide power to an electrolyzer (100), where the electrolyzer (100) is positioned within a cartridge (20) inner volume (40) defined by a cartridge outer casing (30), and wherein the distance between the cartridge (20) inner surface and the electrolyzer (100) along any line is less than the respective dimension of the electrolyzer (100) along the same line.

3. A compact electrolyzer cartridge (20) to be connected in connection to a wind turbine (1) to provide power to an electrolyzer (100), where the electrolyzer (100) is positioned within a cartridge 20 inner volume 40 defined by a cartridge outer casing 30, and wherein at one of the height, width and/or length of the outer casing (30) is less than 2 times the respective height, width and/or length of the electrolyzer (100).

4. A compact electrolyzer cartridge 20 according to any of the previous claims, wherein the electrolyzer )100) is pressurized.

5. A compact electrolyzer cartridge 20 according to any of the preceding claims, wherein the inner volume 40 is filled with a substance outside the electrolyzer 100.

6. A compact electrolyzer cartridge (20) according to claim 5, wherein the substance is a gel or fluid.

7. A compact electrolyzer cartridge (20) according to claim 6, wherein the substance is or includes Bingham plastic fluid or a substance of similar properties.

8. A compact electrolyzer cartridge (20) according to claim 5, 6 or 7, wherein the substance comprises thermal insulation properties.

9. A compact electrolyzer cartridge (20) according to any of the previous claims, wherein a heater (110) is positioned in contact with the inner volume (40).

10. A compact electrolyzer cartridge (20) according to claim 5, wherein the casing (30) comprises openings (60) for inlet and outlet substances for the electrolyzer (100), such as gasses, liquids or mixes thereof, and wherein conduits in the inner volume (40) connects the electrolyzer (100) with the openings (60) and is within the substance.

11. A compact electrolyzer cartridge (20) according to claim 5, wherein the casing (30) comprises openings (70) for electrical connection to the electrolyzer (100), and wherein conductors in the inner volume (40) connects the electrolyzer (100) with the openings (70) and is within the substance.

12. A compact electrolyzer cartridge (20) according to any of the preceding claims, wherein the cartridge (20) further comprises transporting means (130) adapted for transport of the cartridge (20).

13. Method to produce a compact electrolyzer cartridge (20), the method the method to produce a compact electrolyzer cartridge (20), the method including (1000) to provide an electrolyzer (100), to provide (1100) a cartridge (20) having at least one dimension that allows only one electrolyzer (100) within the casing (30), and (1200) position the electrolyzer (100) within a casing (30) inner volume (40), and wherein the cartridge (20) is adapted to be connected in relation to a wind turbine (1) to power the electrolyzer (100).

14. Method according to claim 13, wherein the method includes (1300) to fill the inner volume (40) with a substance according to any of claims 5-8.

15. Method according to claim 13 or 14, wherein the method includes (1400) to pressurize the electrolyzer (100).
